(19) Europäisches Patentamt
European Patent Office
Office européen des brevets

(11) EP 4 693 481 A1

(12) EUROPEAN PATENT APPLICATION

(43) Date of publication:
**11.02.2026 Bulletin 2026/07**

(21) Application number: **25180830.9**

(22) Date of filing: **04.06.2025**

(51) International Patent Classification (IPC):
***H01M 4/50*** *(2010.01)* ***H01M 4/52*** *(2010.01)*
***H01M 4/58*** *(2010.01)* ***H01M 10/0567*** *(2010.01)*
***H01M 10/42*** *(2006.01)*

(52) Cooperative Patent Classification (CPC):
**H01M 10/0567; H01M 4/502; H01M 4/523; H01M 4/58; H01M 10/4235;** H01M 4/364; H01M 10/0568; H01M 10/0569

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **07.08.2024 KR 20240105353**

(71) Applicant: **SAMSUNG SDI CO., LTD.**
**Yongin-si, Gyeonggi-do 17084 (KR)**

(72) Inventors:
- **Park, Hongryeol**
  **Yongin-si, Gyeonggi-do 17084 (KR)**
- **Choi, Hyunbong**
  **Yongin-si, Gyeonggi-do 17084 (KR)**
- **Park, Sangwoo**
  **Yongin-si, Gyeonggi-do 17084 (KR)**
- **Ji, Woojung**
  **Yongin-si, Gyeonggi-do 17084 (KR)**
- **Kim, Sohee**
  **Yongin-si, Gyeonggi-do 17084 (KR)**
- **Yang, Yeji**
  **Yongin-si, Gyeonggi-do 17084 (KR)**
- **Jun, Dasol**
  **Yongin-si, Gyeonggi-do 17084 (KR)**
- **Shin, Youngkyeong**
  **Yongin-si, Gyeonggi-do 17084 (KR)**
- **Kim, Sanghoon**
  **Yongin-si, Gyeonggi-do 17084 (KR)**
- **Tasy, Olga**
  **Yongin-si, Gyeonggi-do 17084 (KR)**

(74) Representative: **Gulde & Partner**
**Patent- und Rechtsanwaltskanzlei mbB**
**Berliner Freiheit 2**
**10785 Berlin (DE)**

# (54) POSITIVE ELECTRODE FOR RECHARGEABLE LITHIUM BATTERY

(57) A positive electrode and a rechargeable lithium battery including the positive electrode are disclosed. The rechargeable lithium battery includes a positive electrode that includes a positive electrode active material, a negative electrode that includes a negative electrode active material, and an electrolyte that includes a non-aqueous organic solvent, a lithium salt, and an additive represented by Chemical Formula 1. The positive electrode active material includes lithium-iron-phosphate-based compound.

Chemical Formula 1

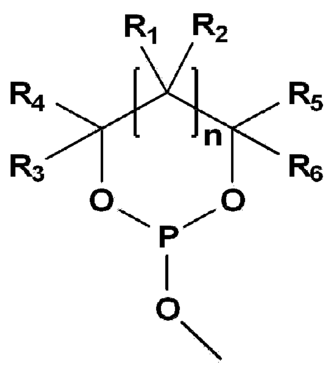

EP 4 693 481 A1

## Description

## BACKGROUND

### 1. Field

The present disclosure relates to a rechargeable lithium battery.

### 2. Description of the Related Art

Recently, with the rapid proliferation or spread of electronic devises that use batteries (such as mobile phones, laptop computers, and/or the like) and/or electric vehicles, the demand for rechargeable batteries with high energy density and high capacity (e.g., electrical capacity) is rapidly increasing. Therefore, intensive research and development have been conducted to improve or enhance the performance of rechargeable lithium batteries.

A rechargeable lithium battery includes a positive electrode, a negative electrode, and an electrolyte. The positive electrode and the negative electrode include an active material in which intercalation and deintercalation may occur. The rechargeable lithium battery generates electrical energy through oxidation and reduction reactions if (e.g., when) lithium ions are intercalated and deintercalated.

A lithium salt dissolved in a non-aqueous (e.g., water-insoluble) organic solvent is used as the electrolyte of the rechargeable lithium battery. The characteristics of the rechargeable lithium battery are exhibited by complex chemical reactions between the positive electrode and the electrolyte and/or between the negative electrode and the electrolyte. Accordingly, the use of an appropriate or suitable electrolyte is an important variable for the improvement or enhancement of the rechargeable lithium battery.

## SUMMARY

The invention is defined by the appended claims. The description that follows is subjected to this limitation. Any disclosure lying outside the scope of said claims is only intended for illustrative as well as comparative purposes.

One or more aspects of embodiments of the present disclosure are directed toward a rechargeable lithium battery whose lifespan characteristics and stability (e.g., chemical stability and/or physical stability) are all improved or enhanced at room temperature and/or at relatively high temperatures (e.g., directed toward a rechargeable lithium battery with improved lifespan characteristics and stability at room temperature and/or relatively high temperatures).

Additional aspects of embodiments will be set forth in part in the description which follows and, in part, will be apparent from the description or may be learned by practice of the presented embodiments of the disclosure.

According of the present disclosure, a rechargeable lithium battery includes: a positive electrode that includes a positive electrode active material; a negative electrode that includes a negative electrode active material; and an electrolyte that includes a non-aqueous organic solvent, a lithium salt, and an additive represented by Chemical Formula 1.

The positive electrode active material includes a lithium-iron-phosphate-based compound.

Chemical Formula 1

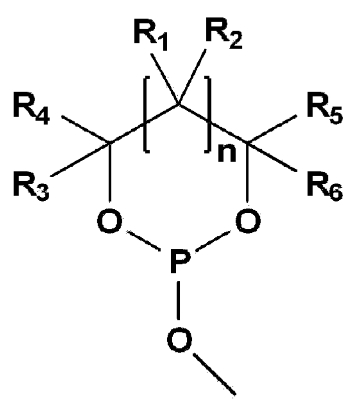

In Chemical Formula 1,

$R_1$ to $R_6$ are each independently hydrogen, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group, and
n is an integer of 0 or 1.

According to one or more embodiments of the present disclosure, a positive electrode for a rechargeable lithium battery may include: a positive electrode active material that includes lithium-iron-phosphate-based compound; and an electrolyte that includes an additive represented by Chemical Formula 1.

## BRIEF DESCRIPTION OF DRAWINGS

The accompanying drawings, together with the specification, illustrate embodiments of the subject matter of the present disclosure, and, together with the description, serve to explain principles of embodiments of the subject matter of the present disclosure.

FIG. 1 is a conceptual diagram partially illustrating a rechargeable lithium battery according to one or more embodiments of the present disclosure.
FIGS. 2-5 are simplified diagrams illustrating a rechargeable lithium battery according to one or more embodiments of the present disclosure.

## DETAILED DESCRIPTION

In order to sufficiently understand the aspects and features of the present disclosure, the subject matter of the present disclosure will be described below in more detail with reference to the accompanying drawings. It should be noted, however, that the present disclosure is not limited to the disclosed embodiments and may be implemented in one or more suitable forms. Rather, these embodiments are provided as examples, by referring to the drawings, to explain the aspects and features of the present disclosure to those skilled in the art.
In the present disclosure, it will be understood that, if (e.g., when) an element is referred to as being "on" another element, the element may be directly on the other element or intervening elements may be present therebetween. In contrast, if (e.g., when) an element is referred to as being "directly on" another element, no intervening elements are present therebetween.
In the drawings, thicknesses of one or more components may be exaggerated to effectively illustrate the technical contents. Like reference numerals refer to like elements throughout, and duplicative descriptions thereof may not be provided in the present disclosure.
Unless otherwise noted in the present disclosure, the expression of singular form may include the expression of plural form. In addition, unless otherwise noted, the phrase "A or B" may indicate "A but not B", "B but not A", and "A and B". The terms "includes/has" and/or "including/having" used in the present disclosure do not exclude the presence or addition of one or more other components.
In the present disclosure, the term "combination thereof" may refer to a mixture, a stack, a composite, a copolymer, an alloy, a blend, a reaction product, and/or the like of constituents.
In the present disclosure, unless otherwise separately defined, the term "substituted" refers to that at least one hydrogen of a substituent or a compound is substituted by deuterium, a halogen group, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, C1 to C20 alkoxy group, a C1 to C10 fluoroalkyl group, or a cyano group.
For example, the term "substituted" may refer to that at least one hydrogen of a substituent or a compound is substituted by deuterium, a halogen group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. For example, the term "substituted" may refer to that at least one hydrogen of a substituent or a compound is substituted by deuterium, a halogen group, a C1 to C20 alkyl group, a C6 to C30 aryl group, a C1 to C10 fluoroalkyl group, or a cyano group. In one or more embodiments, the term "substituted" may refer to that at least one hydrogen of a substituent or a compound is substituted by deuterium, a halogen group, a C1 to C5 alkyl group, a C6 to C18 aryl group, a C1 to C5 fluoroalkyl group, or a cyano group. For example, the term "substituted" may refer to that at least one hydrogen of a substituent or a compound is substituted by deuterium, a cyano group, a halogen group, a methyl group, an ethyl group, a propyl group, a butyl group, a phenyl group, a biphenyl group, a terphenyl group, a trifluoromethyl group, or a naphthyl group.
FIG. 1 is a conceptual diagram partially illustrating a rechargeable lithium battery according to one or more

embodiments of the present disclosure. Referring to FIG. 1, a rechargeable lithium battery includes a positive electrode 10, a negative electrode 20, a separator 30, and an electrolyte ELL.

The positive electrode 10 and the negative electrode 20 may be spaced and/or apart (e.g., spaced apart or separated) from each other across the separator 30. The separator 30 may be arranged or provided between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in/with the electrolyte ELL.

The electrolyte ELL is a medium by which lithium ions are transferred between the positive electrode 10 and the negative electrode 20. In the electrolyte ELL, the lithium ions may move through the separator 30 toward one of the positive electrode 10 and the negative electrode 20.

Based on a shape of a rechargeable lithium battery, the rechargeable lithium battery may be classified into cylindrical, prismatic, pouch, and coin types (or kinds). FIGS. 2-5 are diagrams illustrating a rechargeable lithium battery according to one or more embodiments of the present disclosure, with FIG. 2 illustrating a cylindrical rechargeable lithium battery, FIG. 3 illustrating a prismatic rechargeable lithium battery, and FIGS. 4 and 5 illustrating pouch-type (or kind) rechargeable lithium batteries. Referring to FIGS. 2-5, a rechargeable lithium battery 100 may include an electrode assembly 40 in which a separator 30 is between a positive electrode 10 and a negative electrode 20, and may also include a casing 50 in which the electrode assembly 40 is accommodated or provided. The positive electrode 10, the negative electrode 20, and the separator 30 may be impregnated in/with an electrolyte. The rechargeable lithium battery 100 may include a sealing member 60 that seals the casing 50 as illustrated in FIG. 2. In one or more embodiments, as illustrated in FIG. 3, the rechargeable lithium battery 100 may include a positive electrode lead tab 11, a positive electrode terminal 12, a negative electrode lead tab 21, and a negative electrode terminal 22. As illustrated in FIGS. 4 and 5, the rechargeable lithium battery 100 may include an electrode tab 70, or a positive electrode tab 71 and a negative electrode tab 72, which electrode tab 70 acts or serves as an electrical path to externally induce a current generated in the electrode assembly 40.

The lithium ion batteries that are generally available utilize $LiPF_6$ as a lithium salt in the electrolyte. However, $LiPF_6$ may chemically react with moisture within the lithium ion battery to form PFs, while being decomposed into HF, and the highly reactive substance HF may induce degradation in lifespan characteristics and high-temperature storage properties of the lithium ion battery. Although a fluorophosphite-based additive is used which may stabilize PFs by donating electrons and utilizing Lewis acid properties of PFs, $F^-$ ions released from the fluorophosphite-based additive may cause side reactions to degrade performance of the lithium ion battery. For example, if (e.g., when) the positive electrode active material includes lithium-iron-phosphate-based compound, such as lithium iron phosphate ($LiFePO_4$, LFP) and/or lithium manganese iron phosphate ($LiMnFePO_4$, LMFP), the side reactions may accelerate the degradation in performance of the lithium ion battery.

A rechargeable lithium battery according to the present disclosure includes a positive electrode active material including lithium-iron-phosphate-based compound and also includes an electrolyte including an additive represented by Chemical Formula 1, and the rechargeable lithium battery may effectively or suitably suppress or reduce the side reactions (or a degree or occurrence of the side reactions) resulting from $F^-$ ions and improve or enhance lifespan characteristics and stability (e.g., chemical stability and/or physical stability) not only at room temperature but also at relatively high temperatures.

## Positive Electrode 10

A positive electrode for a rechargeable lithium battery according to the present disclosure includes a positive electrode active material including or consisting of lithium-iron-phosphate-based compound and an electrolyte including an additive represented by Chemical Formula 1.

The positive electrode 10 for a rechargeable lithium battery may include a current collector COL1 and a positive electrode active material layer AML1 on the current collector COL1. The positive electrode active material layer AML1 includes a positive electrode active material and may further include a binder and/or a conductive (e.g., electrically conductive) material (e.g., an electron conductor).

An amount of the positive electrode active material in the positive electrode active material layer AML1 may be 90 wt% to 99.5 wt% relative to 100 wt% (e.g., based on 100 wt% of a total amount) of the positive electrode active material layer AML1. For example, an amount of the positive electrode active material in the positive electrode active material layer AML1 may be 92 wt% to 99.5 wt% or 95 wt% to 99 wt% relative to 100 wt% (e.g., based on 100 wt% of a total amount) of the positive electrode active material layer AML1.

The positive electrode active material includes lithium-iron-phosphate-based compound. For example, the positive electrode active material may include lithium iron phosphate ($LiFePO_4$, LFP) and/or lithium manganese iron phosphate ($LiMnFePO_4$, LMFP).

The lithium-iron-phosphate-based compound may be in an amount of 50 wt% to 98 wt% relative to the total weight (e.g., based on 100 wt% of a total amount) of the positive electrode active material. For example, an amount of the

lithium-iron-phosphate-based compound may be in an amount of 55 wt% to 98 wt%, 75 wt% to 97 wt%, or 85 wt% to 96 wt% relative to the total weight (e.g., based on 100 wt% of a total amount) of the positive electrode active material.

The positive electrode active material in the positive electrode active material layer AML1 may include a compound (e.g., a lithiated intercalation compound) that may reversibly intercalate and deintercalate lithium. For example, the positive electrode active material may further include at least one type (or kind) of composite oxide including lithium and metal that is selected from among cobalt, manganese, nickel, and/or a (e.g., any suitable) combination thereof.

The composite oxide may include lithium transition metal composite oxide, for example, lithium-nickel-based oxide, lithium-cobalt-based oxide, lithium-manganese-based oxide, lithium-iron-phosphate-based compounds, cobalt-free nickel-manganese-based oxide, and/or a (e.g., any suitable) combination thereof.

The positive electrode active material may include lithium composite oxide represented by Chemical Formula 2.

Chemical Formula 2 $Li_xM^1_yM^2_zM^3_{1-y-z}O_{2-a}X_a$

In Chemical Formula 2,

x, y, z, and a may satisfy the relationship of $0.5 \le x \le 1.8$, $0 \le y \le 1$, $0 \le z \le 1$, $0 \le a \le 0.05$, and $0 \le y+z \le 2$.

$M^1$, $M^2$, and $M^3$ may each independently be at least one element selected from among nickel (Ni), cobalt (Co), manganese (Mn), aluminum (Al), boron (B), barium (Ba), calcium (Ca), cerium (Ce), chromium (Cr), iron (Fe), molybdenum (Mo), niobium (Nb), silicon (Si), strontium (Sr), magnesium (Mg), titanium (Ti), vanadium (V), tungsten (W), zirconium (Zr), and lanthanum (La).

X may be at least one element selected from among fluorine (F), sulfur (S), phosphorus (P), and chlorine (Cl).

For example, the lithium composite oxide may include a compound represented by one selected from among the following chemical formulae: $Li_aA_{1-b}X_bO_{2-c}D_c$ (where $0.90 \le a \le 1.8$, $0 \le b \le 0.5$, and $0 \le c \le 0.05$); $Li_aMn_{2-b}X_bO_{4-c}D_c$ (where $0.90 \le a \le 1.8$, $0 \le b \le 0.5$, and $0 \le c \le 0.05$); $Li_aNi_{1-b-c}Co_bX_cO_{2-\alpha}D_\alpha$ (where $0.90 \le a \le 1.8$, $0 \le b \le 0.5$, $0 \le c \le 0.5$, and $0 < \alpha < 2$); $Li_aNi_{1-b-c}Mn_bX_cO_{2-\alpha}D_\alpha$ (where $0.90 \le a \le 1.8$, $0 \le b \le 0.5$, $0 \le c \le 0.5$, and $0 < \alpha < 2$); $Li_aNi_bCo_cL^1_dG_eO_2$ (where $0.90 \le a \le 1.8$, $0 \le b \le 0.9$, $0 \le c \le 0.5$, $0 \le d \le 0.5$, and $0 \le e \le 0.1$); $Li_aNiG_bO_2$ (where $0.90 \le a \le 1.8$ and $0.001 \le b \le 0.1$); $Li_aCoG_bO_2$ (where $0.90 \le a \le 1.8$ and $0.001 \le b \le 0.1$); $Li_aMn_{1-b}G_bO_2$ (where $0.90 \le a \le 1.8$ and $0.001 \le b \le 0.1$); $Li_aMn_2G_bO_4$ (where $0.90 \le a \le 1.8$ and $0.001 \le b \le 0.1$); $Li_aMn_{1-g}G_gPO_4$ (where $0.90 \le a \le 1.8$ and $0 \le g \le 0.5$); $Li_{(3-f)}Fe_2(PO_4)_3$ (where $0 \le f \le 2$); and $Li_aFePO_4$ (where $0.90 \le a \le 1.8$).

In the foregoing chemical formulae, A may be Ni, Co, Mn, and/or a (e.g., any suitable) combination thereof, X may be Al, Ni, Co, Mn, Cr, iron (Fe), Mg, Sr, V, a rare-earth element, and/or a (e.g., any suitable) combination thereof, D may be oxygen (O), F, S, P, and/or a (e.g., any suitable) combination thereof, G may be Al, Cr, Mn, Fe, Mg, La, Ce, Sr, V, and/or a (e.g., any suitable) combination thereof, and $L^1$ may be Mn, Al, and/or a (e.g., any suitable) combination thereof.

For example, the lithium composite oxide may include one or more selected from among lithium nickel cobalt aluminum oxide ($LiNiCoAlO_2$, NCA), lithium nickel cobalt manganese oxide ($LiNiCoMnO_2$, NCM), lithium manganese oxide ($LiMn_2O_4$, LMO), lithium nickel manganese oxide ($LiNi_{0.5}Mn_{1.5}O_4$, LNMO), and lithium cobalt oxide ($LiCoO_2$, LCO).

In the lithium composite oxide, nickel may be present in an amount of equal to or greater than 50 mol% relative to (e.g., based on) 100 mol% of metal except lithium. For example, in the lithium composite oxide, nickel may be present in an amount of equal to or greater than 65 mol%, equal to or greater than 80 mol%, equal to or greater than 85 mol%, equal to or greater than 90 mol%, equal to or greater than 91 mol%, equal to or greater than 94 mol%, or equal to or greater than 99 mol% relative to (e.g., based on) 100 mol% of metal except lithium.

For example, the positive electrode active material may include lithium iron phosphate ($LiFePO_4$, LFP) and lithium nickel cobalt aluminum oxide ($LiNiCoAlO_2$, NCA), and the lithium iron phosphate ($LiFePO_4$, LFP) and the lithium nickel cobalt aluminum oxide ($LiNiCoAlO_2$, NCA) may have a weight ratio of 9:1 to 5:5, 9:1 to 6:4, or 9:1 to 8:2.

The binder may act or serve to improve or enhance attachment of positive electrode active material particles to each other and also to improve or enhance attachment of the positive electrode active material to the current collector COL1. The binder may include, for example, polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and/or nylon, but embodiments of the present disclosure are not limited thereto.

For example, the positive electrode may include a binder including one or more selected from among polyvinyl alcohol, carboxymethyl cellulose, hydroxypropyl cellulose, diacetyl cellulose, polyvinyl chloride, carboxylated polyvinyl chloride, polyvinyl fluoride, polyethylene oxide, polyvinylpyrrolidone, polyurethane, polytetrafluoroethylene, polyvinylidene fluoride, polyethylene, and polypropylene.

The binder may be present in an amount of 0.5 wt% to 5 wt% relative to the total weight (e.g., based on 100 wt% of a total amount) of the positive electrode. For example, the binder may be present in an amount of 1 wt% to 4.5 wt% or 1.5 wt% to 4 wt% relative to the total weight (e.g., based on 100 wt% of a total amount) of the positive electrode.

The conductive (e.g., electrically conductive) material may be used to provide an electrode with conductivity (e.g., electrical conductivity), and any suitable conductive (e.g., electrically conductive) material that does not cause a chemical change (e.g., undesirable chemical change) in a rechargeable lithium battery may be used as the conductive (e.g., electrically conductive) material. The conductive (e.g., electrically conductive) material may include, for example, a carbon-based material, such as natural graphite, artificial graphite, carbon black, acetylene black, Ketjen black, carbon fiber, carbon nano-fiber, and carbon nano-tube; a metal powder and/or a metal fiber containing one or more selected from among copper, nickel, aluminum, and silver; a conductive (e.g., electrically conductive) polymer, such as polyphenylene and/or a polyphenylene derivative; and/or a (e.g., any suitable) mixture thereof.

For example, the positive electrode may include a conductive (e.g., electrically conductive) material including a carbon-based material, a metal-based material in the form of a metal powder and/or a metal fiber, a conductive (e.g., electrically conductive) polymer, and/or a (e.g., any suitable) mixture thereof.

The positive electrode conductive (e.g., electrically conductive) material may be present in an amount of 0.2 wt% to 5 wt% relative to the total weight (e.g., based on 100 wt% of a total amount) of the positive electrode. For example, the positive electrode conductive (e.g., electrically conductive) material may be present in an amount of 0.2 wt% to 4 wt%, 0.3 wt% to 3.5 wt%, or 0.5 wt% to 2 wt% relative to the total weight (e.g., based on 100 wt% of a total amount) of the positive electrode.

Aluminum (Al) may be used as the current collector COL1, but embodiments of the present disclosure are not limited thereto.

## Negative Electrode 20

A rechargeable lithium battery according to the present disclosure includes a negative electrode. For example, a rechargeable lithium battery according to one or more embodiments of the present disclosure may include a negative electrode including a negative electrode active material.

The negative electrode 20 for a rechargeable lithium battery may include a current collector COL2 and a negative electrode active material layer AML2 on the current collector COL2. The negative electrode active material layer AML2 may include a negative electrode active material and may further include one or more of a binder and a conductor.

The negative electrode active material in the negative electrode active material layer AML2 may include a material that may reversibly intercalate and deintercalate lithium ions, lithium metal, a lithium metal alloy, a material that may dope and de-dope lithium, and/or transition metal oxide.

The material that may reversibly intercalate and deintercalate lithium ions may include a carbon-based negative electrode active material, for example, crystalline carbon, amorphous (e.g., non-crystalline) carbon, and/or a (e.g., any suitable) combination thereof. For example, the crystalline carbon may include graphite, such as non-shaped (e.g., substantially non-shaped), sheet-shaped (e.g., substantially sheet-shaped), flake-shaped (e.g., substantially flake-shaped), sphere-shaped (e.g., substantially sphere-shaped), and/or fiber-shaped (e.g., substantially fiber-shaped) natural graphite and/or artificial graphite, and the amorphous (e.g., non-crystalline) carbon may include soft carbon, hard carbon, mesophase pitch carbon, and/or calcined coke.

The lithium metal alloy may include an alloy of lithium and metal that is selected from among sodium (Na), potassium (K), rubidium (Rb), cesium (Cs), francium (Fr), beryllium (Be), Mg, Ca, Sr, Si, antimony (Sb), lead (Pb), indium (In), zinc (Zn), Ba, radium (Ra), germanium (Ge), Al, and tin (Sn).

The material that may dope and de-dope lithium may include a Si-based negative electrode active material and/or a Sn-based negative electrode active material. The Si-based negative electrode active material may include silicon, silicon-carbon composite, $SiO_x$ (where $0 < x \leq 2$), Si-Q alloy (where Q may be alkali metal, alkaline earth metal, Group 13 element, Group 14 element (except for Si), Group 15 element, Group 16 element, transition metal, a rare-earth element, and/or a (e.g., any suitable) combination thereof), and/or a (e.g., any suitable) combination thereof. The Sn-based negative electrode active material may include Sn, $SnO_x$ (where $0 < x \leq 2$; e.g., $SnO_2$), a Sn-based alloy, a combination thereof.

The silicon-carbon composite may be a composite of silicon and amorphous (e.g., non-crystalline) carbon. In one or more embodiments, the silicon-carbon composite may have a structure in which the amorphous (e.g., non-crystalline) carbon is coated on a surface of the silicon particle. For example, the silicon-carbon composite may include a secondary particle (core) in which primary silicon particles are assembled, and an amorphous (e.g., non-crystalline) carbon coating layer (shell) on a surface of the secondary particle. The amorphous (e.g., non-crystalline) carbon may also be between the primary silicon particles, and for example, the primary silicon particles may be coated with the amorphous (e.g., non-crystalline) carbon. The secondary particles may be present dispersed in an amorphous (e.g., non-crystalline) carbon matrix.

The silicon-carbon composite may further include crystalline carbon. For example, the silicon-carbon composite may include a core including crystalline carbon and silicon particles and may also include an amorphous (e.g., non-crystalline) carbon coating layer on a surface of the core.

The Si-based negative electrode active material and/or the Sn-based negative electrode active material may be used in combination with a carbon-based negative electrode active material.

The negative electrode active material in the negative electrode active material layer AML2 may be present in an amount of 90 wt% to 99 wt% relative to the total weight (e.g., based on 100 wt% of a total amount) of the negative electrode active material layer AML2. For example, the negative electrode active material may be present in an amount of 93 wt% to 99 wt% or 96 wt% to 98.5 wt% relative to the total weight (e.g., based on 100 wt% of a total amount) of the negative electrode active material layer AML2.

The negative electrode active material may include at least one selected from among graphite and a silicon composite.

If (e.g., when) the negative electrode active material includes both (e.g., simultaneously) a silicon composite and graphite, the silicon composite and the graphite may be in the form of a mixture, and, in one or more embodiments, the silicon composite and the graphite may be in a weight ratio of 1:99 to 50:50. For example, a weight ratio of the silicon composite and the graphite may be 3:97 to 20:80 or 5:95 to 20:80.

The silicon composite may include a core including silicon-based particles and an amorphous (e.g., non-crystalline) carbon coating layer, and the silicon-based particle may include at least one selected from among a silicon-carbon composite, $SiO_x$ (where $0 < x \leq 2$), and a silicon alloy. For example, the silicon-carbon composite may include a core including silicon particles and crystalline carbon and may also include an amorphous (e.g., non-crystalline) carbon coating layer on a surface of the core.

The crystalline carbon may include graphite, for example, natural graphite, artificial graphite, and/or a (e.g., any suitable) mixture thereof.

The negative electrode may include a binder. The negative electrode binder may act or serve to improve or enhance attachment of negative electrode active material particles to each other and also to improve or enhance attachment of the negative electrode active material to the current collector COL2. The binder may include a non-aqueous (e.g., water-insoluble) binder, an aqueous (e.g., water-soluble) binder, a dry binder, and/or a (e.g., any suitable) combination thereof.

The non-aqueous (e.g., water-insoluble) binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamide imide, polyimide, and/or a (e.g., any suitable) combination thereof.

The aqueous (e.g., water-soluble) binder may include a styrene-butadiene rubber, a (meth)acrylated styrene-butadiene rubber, a (meth)acrylonitrile-butadiene rubber, a (meth)acrylic rubber, a butyl rubber, a fluoro elastomer, polyethylene oxide, polyvinyl pyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acrylic resin, a phenolic resin, an epoxy resin, polyvinyl alcohol, and/or a (e.g., any suitable) combination thereof.

If (e.g., when) an aqueous (e.g., water-soluble) binder is used as the negative electrode binder, a cellulose-based compound capable of providing or increasing viscosity may further be included. The cellulose-based compound may include one or more selected from among carboxymethyl cellulose, hydroxypropyl methyl cellulose, methyl cellulose, and alkali metal salts thereof. The alkali metal salt may include sodium (Na), potassium (K), and/or lithium (Li).

The dry binder may include a fibrillizable polymer material, for example, polytetrafluoroethylene, polyvinylidene fluoride, a polyvinylidene fluoride-hexafluoropropylene copolymer, polyethylene oxide, and/or a (e.g., any suitable) combination thereof.

The binder may be present in an amount of 0.5 wt% to 5 wt% relative to the total weight (e.g., based on 100 wt% of a total amount) of the negative electrode. For example, the binder may be present in an amount of 0.5 wt% to 3.5 wt% or 0.5 wt% to 2 wt% relative to the total weight (e.g., based on 100 wt% of a total amount) of the negative electrode.

The negative electrode may include a conductive (e.g., electrically conductive) material. A description of the conductive (e.g., electrically conductive) material may be as discussed in one or more embodiments.

The current collector COL2 may include a copper foil, a nickel foil, a stainless-steel foil, a titanium foil, a nickel foam, a copper foam, a polymer substrate coated with a conductive (e.g., electrically conductive) metal, and/or a (e.g., any suitable) combination thereof.

## Separator 30

Based on a type (or kind) of the rechargeable lithium battery, the separator 30 may be between positive electrode 10 and the negative electrode 20. The separator 30 may include one or more selected from among polyethylene, polypropylene, and polyvinylidene fluoride, and may have a multi-layered separator thereof, such as a polyethylene/-polypropylene bi-layered separator, a polyethylene/polypropylene/polyethylene tri-layered separator, and/or a polypropylene/polyethylene/polypropylene tri-layered separator.

The separator 30 may include a porous substrate and a coating layer on a side or surface (e.g., one surface or both surfaces (e.g., two opposite (opposite facing) surfaces)) of the porous substrate, which the coating layer may include

an organic material, an inorganic material, and/or a (e.g., any suitable) combination thereof.

The porous substrate may be a polymer layer including one selected from among polyolefin, such as polyethylene and polypropylene, polyester, such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, a cyclic olefin copolymer, polyphenylenesulphide, polyethylene naphthalate, glass fiber, and polytetrafluoroethylene (e.g., Teflon™), or may be a copolymer or (e.g., any suitable) mixture including two or more of the materials as described in one or more embodiments.

The organic material may include a polyvinylidenefluoride-based copolymer and/or a (meth)acrylic copolymer.

The inorganic material may include an inorganic particle selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, Boehmite, and/or a (e.g., any suitable) combination thereof, but embodiments of the present disclosure are not limited thereto.

The organic material and the inorganic material may be present mixed in one coating layer or may be present as a stack of a coating layer including the organic material and a coating layer including an inorganic material.

**Electrolyte ELL**

An electrolyte for a rechargeable lithium battery according to the present disclosure includes a non-aqueous organic solvent, a lithium salt, and an additive represented by Chemical Formula 1.

Chemical Formula 1

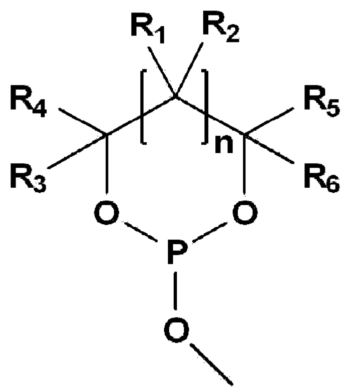

In Chemical Formula 1,

$R_1$ to $R_6$ are each independently hydrogen, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group.

n is an integer of 0 or 1.

The non-aqueous (e.g., water-insoluble) organic solvent may act or serve as a medium to transmit ions that participate in electrochemical reactions of rechargeable lithium batteries.

The non-aqueous organic solvent may include a carbonate-based solvent, an ester-based solvent, an ether-based solvent, a ketone-based solvent, an alcohol-based solvent, an aprotic solvent, and/or a (e.g., any suitable) mixture thereof. The non-aqueous organic solvent may be used alone or in a mixture of two or more substances.

The carbonate-based solvent may include dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), and/or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, and/or caprolactone.

The ether-based solvent may include dibutyl ether, tetraglyme, diglyme, dimethoxyethane, 2-methyltetrahydrofuran, 2,5-dimethyltetrahydrofuran, and/or tetrahydrofuran. The ketone-based solvent may include cyclohexanone. The alcohol-based solvent may include ethyl alcohol and/or isopropyl alcohol, and the aprotic solvent may include nitriles, such as R-CN (where R may be a hydrocarbon group having a C2 to C20 linear, branched, or cyclic structure and may include a double bond, an aromatic ring, and/or an ether group); amides, such as dimethylformamide; dioxolanes, such as

1,3-dioxolane and/or 1,4-dioxolane; and/or sulfolanes.

In one or more embodiments, if (e.g., when) a carbonate-based solvent is used as the non-aqueous organic solvent, cyclic carbonate and chain carbonate may be mixed and used, and the cyclic carbonate and the chain carbonate may be mixed in a volume ratio of 1:1 to 1:9.

For example, the non-aqueous organic solvent may include at least one selected from among ethylene carbonate (EC), propylene carbonate (PC), propyl propionate (PP), ethyl methyl carbonate (EMC), dimethyl carbonate (DMC), diethyl carbonate (DEC), dipropyl carbonate (DPC), methylpropyl carbonate (MPC), ethylpropyl carbonate (EPC), and butylene carbonate (BC).

For example, the non-aqueous organic solvent may be a mixed solvent of ethylene carbonate (EC), ethyl methyl carbonate (EMC), and dimethyl carbonate (DMC).

For example, the ethylene carbonate (EC) may be in an amount of 10 vol% to 30 vol% relative to the total volume (e.g., based on 100 vol% of the total volume) of the non-aqueous organic solvent. The ethyl methyl carbonate (EMC) may be in an amount of 20 vol% to 70 vol% relative to the total volume (e.g., based on 100 vol% of the total volume) of the non-aqueous organic solvent. The dimethyl carbonate (DMC) may be in an amount of 20 vol% to 70 vol% relative to the total volume (e.g., based on 100 vol% of the total volume) of the non-aqueous organic solvent.

The lithium salt may be a material that is dissolved in the organic solvent to act or serve as a supply source of lithium ions in rechargeable lithium batteries and plays a role in enabling a basic operation of rechargeable lithium batteries and promoting transportation of lithium ions between the positive electrode and the negative electrode. The lithium salt may include, for example, at least one selected from among $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (where x and y may be integers between 1 and 20), lithium trifluoromethane sulfonate, lithium tetrafluoroethanesulfonate, lithium difluorobis(oxalato)phosphate (LiDFBOP), and lithium bis(oxalato)borate (LiBOB)

For example, the lithium salt may include one or more selected from among $LiPF_6$, $LiClO_4$, $LiBF_4$, lithium bis(fluorosulfonyl)imide (LiFSI), LiTFSI, $LiSO_3CF_3$, LiBOB, LiFOB, LiDFBP, LiTFOP, $LiPO_2F_2$, $LiSbF_6$, $LiAsF_6$, $LiAlO_2$, $LiAlCl_4$, LiCl, LiI, $LiN(SO_3C_2F_5)_2$, and $LiC_4F_9SO_3$. For example, the lithium salt may include $LiPF_6$.

The lithium salt may have a concentration of 0.1 *M* to 2.0 *M*. For example, the lithium salt may have a concentration of 0.5 *M* to 1.0 *M*, equal to or less than 2.0 *M*, equal to or less than 1.7 *M*, or equal to or less than 1.5 *M.* As the concentration of the lithium salt falls within the foregoing ranges, the electrolyte (e.g., is an ion conductor) may appropriately or suitably maintain its conductivity (e.g., ion conductivity) and viscosity.

Chemical Formula 1 may be represented by Chemical Formula 1-1 or 1-2.

Chemical Formula 1-1

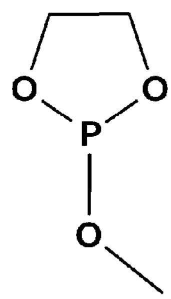

Chemical Formula 1-2

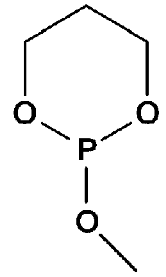

The additive represented by Chemical Formula 1 may be in an amount of 0.01 wt% to 3 wt% relative to the total weight (e.g., based on 100 wt% of a total amount) of the electrolyte. For example, an amount of the additive represented by

Chemical Formula 1 may be 0.05 wt% to 2.5 wt%, 0.1 wt% to 2 wt%, 0.2 wt% to 1.5 wt%, or 0.5 wt% to 1 wt% relative to the total weight (e.g., based on 100 wt% of a total amount) of the electrolyte. As an amount of the additive represented by Chemical Formula 1 falls within the foregoing ranges, it may effectively or suitably implement or provide a rechargeable lithium battery with improved or enhanced storage characteristics and lifespan properties at room temperature and/or at relatively high temperatures.

Hereinafter, embodiments of the present disclosure will be described in more detail with reference to Embodiments and Comparatives. The following examples are only examples of the present disclosure, and embodiments of the present disclosure are not limited to the following examples.

## Embodiments

### Fabrication of Rechargeable Lithium Battery

#### Embodiment 1

**(1) Manufacture of Positive Electrode**

$LiFePO_4$ as a positive electrode active material, polyvinylidene fluoride as a binder, and acetylene black as a conductive (e.g., electrically conductive) material were mixed in a weight ratio of 96:3:1, and the mixture was dispersed in N-methyl pyrrolidone to prepare a positive electrode active material slurry. The positive electrode active material slurry was coated on an Al foil of 15 μm in thickness, dried at 100 °C, and then pressed to manufacture a positive electrode.

**(2) Manufacture of Negative Electrode**

Artificial graphite and silicon nano-particles mixed in a weight ratio of 93:7 as a negative electrode active material, a styrene-butadiene rubber (SBR) and carboxymethyl cellulose (CMC) as a binder, were mixed in a weight ratio of 98:1:1, and the mixture was distributed in distilled water to prepare a negative electrode active material slurry. The negative electrode active material slurry was coated on a Cu foil of 10 μm in thickness, dried at 100 °C, and then pressed to manufacture a negative electrode.

**(3) Preparation of Electrolyte**

1.5 *M* of $LiPF_6$ was dissolved in a non-aqueous organic solvent containing ethylene carbonate (EC), ethyl methyl carbonate (EMC), and dimethyl carbonate (DMC) mixed in a volume ratio of 20:40:40, and an additive represented by Chemical Formula 1-1 in amount of 0.5 wt% was added to prepare an electrolyte.

Chemical Formula 1-1

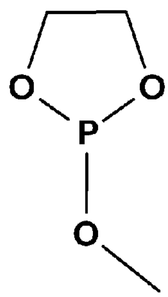

**(4) Fabrication of Rechargeable Lithium Battery**

The positive electrode manufactured in the step (1), the negative electrode manufactured in the step (2), and a polyethylene separator of 10 μm in thickness were assembled to manufacture an electrode assembly, and the electrolyte prepared in the step (3) was introduced to fabricate a rechargeable lithium battery.

#### Embodiment 2

A rechargeable lithium battery was fabricated in substantially the same method as in Embodiment 1, except that

$LiMnFePO_4$ was used as the positive electrode active material in the step (1).

**Embodiment 3**

A rechargeable lithium battery was fabricated in substantially the same method as in Embodiment 1, except that a mixture of $LiFePO_4$ and $LiNiCoAlO_2$ (not less than 80 mol% of Ni) mixed in a weight ratio of 8:2 was used as the positive electrode active material in the step (1).

**Comparative 1**

A rechargeable lithium battery was fabricated in substantially the same method as in Embodiment 1, except that the compound represented by Chemical Formula 1-1 was not added in the step (1).

**Comparative 2**

A rechargeable lithium battery was fabricated in substantially the same method as in Embodiment 1, except that a compound represented by Chemical Formula A was used in the step (1).

Chemical Formula A

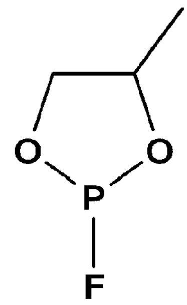

**Comparative 3**

A rechargeable lithium battery was fabricated in substantially the same method as in Embodiment 2, except that the compound represented by Chemical Formula 1-1 was not added in the step (3).

**Comparative 4**

A rechargeable lithium battery was fabricated in substantially the same method as in Embodiment 2, except that a compound represented by Chemical Formula A was used in the step (3).

Chemical Formula A

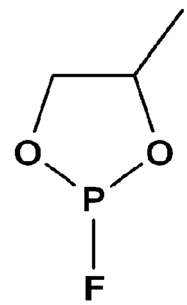

**Comparative 5**

A rechargeable lithium battery was fabricated in substantially the same method as in Embodiment 3, except that

the compound represented by Chemical Formula 1-1 was not added in the step (3).

**Comparative 6**

A rechargeable lithium battery was fabricated in substantially the same method as in Embodiment 3, except that a compound represented by Chemical Formula A was used in the step (3).

Chemical Formula A

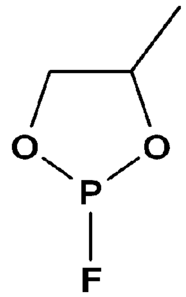

**Evaluation Example**

**Evaluation 1: Charge-Discharge Characteristics at Room Temperature**

Charge-discharge characteristics at room temperature were evaluated for the rechargeable lithium batteries fabricated according to Embodiments 1 to 3 and Comparatives 1 to 6. For example, under the conditions of 25 °C and 0.33 C charge (CC/CV, 4.2 V, 0.02 C cut-off) / 0.33 C discharge (CC, 2.5 V cut-off), a charge-discharge cycle of the rechargeable lithium battery was performed 1,000 times to measure a capacity retention rate and a change of direct-current internal resistance (DC-IR). The capacity retention rate was calculated according to Equation A, and based on a voltage change during a discharge while applying a current of SOC 50% C for 30 seconds.

Capacity retention rate (%) = (discharge capacity after 1,000 cycles / discharge capacity after 1 cycle) × 100 Equation A

Equation B

DC-IR change rate (%) = (DC-IR after 1,000 cycles / initial DC-IR) × 100

**Evaluation 2: Storage characteristics at high temperature (60 °C)**

Storage characteristics at a high temperature (60 °C) were evaluated for the rechargeable lithium batteries fabricated according to Embodiments 1 to 3 and Comparatives 1 to 6.

For example, after the rechargeable lithium battery was allowed to measure an initial direct-current internal resistance (DC-IR) as $\Delta V/\Delta I$ (voltage change/current change), the rechargeable lithium battery was allowed to charge its maximum energy state into a full charge state (SOC 100%) and stored in the charged state at a high temperature (60 °C) for 7 days, and then was discharged at 0.2 C to 2.5 V under the condition of constant current to measure an initial discharge capacity and a direct-current internal resistance (DC-IR). A DC-IR increase rate (%) was calculated according to Equation C.

Equation C

DC-IR increase rate (%) = (DC-IR after 7 days / initial DC-IR) × 100

Afterwards, the cell after the discharge capacity measurement was recharged at 0.33 C to 4.2 V under the condition of constant current and 0.02 C cut-off under the condition of constant voltage and discharged at 0.33 C to 2.5 V

under the condition of constant current to thereby measure a discharge capacity, and a capacity recovery rate (%) was calculated according to Equation D.

Capacity recovery rate (%) = (discharge capacity of recharged cell after storage at 60 °C for 7 days / initial discharge capacity before high-temperature storage) × 100 Equation D

Table 1

| Category | Room temperature | | 60 °C | |
|---|---|---|---|---|
| | Capacity retention rate (%) | DC-IR change rate (%) | Capacity recovery rate (%) | DC-IR increase rate (%) |
| Embodiment 1 | 90.9 | 118.9 | 93.7 | 122.0 |
| Embodiment 2 | 92.1 | 115.2 | 92.7 | 118.8 |
| Embodiment 3 | 95.4 | 110.1 | 94.0 | 115.3 |
| Comparative 1 | 70.8 | 148.9 | 73.5 | 198.8 |
| Comparative 2 | 52.1 | 192.2 | 58.1 | 221.7 |
| Comparative 3 | 78.4 | 130.2 | 81.5 | 133.7 |
| Comparative 4 | 56.6 | 142.7 | 62.4 | 174.8 |
| Comparative 5 | 58.3 | 177.7 | 68.5 | 164.0 |
| Comparative 6 | 45.1 | 199.5 | 55.4 | 180.2 |

Referring to Table 1, compared to the rechargeable lithium batteries of Comparatives 1 to 6, the rechargeable lithium batteries of Embodiments 1 to 3 exhibit excellent charge-discharge characteristics at room temperature and storage properties at a high temperature (60 °C). For example, the rechargeable lithium batteries of Embodiments 1 to 3, which were fabricated by using an electrolyte including the additive represented by Chemical Formula 1, showed a capacity retention rate of more than 90% and a DC-IR change rate of less than 120% at room temperature. Also, the rechargeable lithium batteries of Embodiments 1 to 3 showed a capacity recovery rate of more than 92% and a DC-IR increase rate of less than 125% at a high temperature (60 °C). Therefore, it may be ascertained that the rechargeable lithium batteries of Embodiments 1 to 3 exhibited both excellent charge-discharge characteristics at room temperature and storage properties at a high temperature (60 °C), compared to the rechargeable lithium batteries of Comparatives 1 to 6, which used an electrolyte having a structure different from that of Chemical Formula 1 or which used no additive. For example, Embodiment 3, in which a mixture of lithium iron phosphate (LFP) and lithium nickel cobalt aluminum oxide (NCA) was used as the positive electrode active material, exhibited excellent charge-discharge characteristics at room temperature and storage properties at a high temperature (60 °C), compared to Embodiments 1 and 2, in which lithium iron phosphate (LFP) or lithium manganese iron phosphate (LMFP) was used alone as the positive electrode active material.

A rechargeable lithium battery according to one or more embodiments of the present disclosure may exhibit improved or enhanced lifespan characteristics and stability (e.g., chemical stability and/or physical stability) not only at room temperature but also at relatively high temperatures during activation of the rechargeable lithium battery.

In summary, compared to the rechargeable lithium batteries of Comparatives 1 to 6, the rechargeable lithium batteries of Embodiments 1 to 3, which use an electrolyte with an additive represented by Chemical Formula 1, exhibit superior charge-discharge characteristics at room temperature and storage properties at high temperatures (60 °C). For example, these batteries show a capacity retention rate of over 90% and a DC-IR change rate of less than 120% at room temperature, and a capacity recovery rate of over 92% and a DC-IR increase rate of less than 125% at high temperatures. Notably, Embodiment 3, which uses a mixture of lithium iron phosphate (LFP) and lithium nickel cobalt aluminum oxide (NCA) as the positive electrode active material, demonstrates better performance compared to Embodiments 1 and 2, which use LFP or lithium manganese iron phosphate (LMFP) alone. Thus, the rechargeable lithium batteries of Embodiments 1 to 3 show enhanced lifespan characteristics and stability at both room and high temperatures.

A person of ordinary skill in the art, in view of the present disclosure in its entirety, would appreciate that each suitable feature of the one or more embodiments of the present disclosure may be combined or combined with each other, partially or entirely, and may be technically interlocked and operated in one or more suitable ways, and each embodiment may be implemented independently of each other or in conjunction with each other in any suitable manner unless otherwise stated or implied.

## Claims

1. A rechargeable lithium battery (100), comprising:

   a positive electrode (10) that comprises a positive electrode active material;
   a negative electrode (20) that comprises a negative electrode active material; and
   an electrolyte that comprises a non-aqueous organic solvent, a lithium salt, and an additive represented by Chemical Formula 1,
   wherein the positive electrode active material comprises lithium-iron-phosphate-based compound,

   Chemical Formula 1

   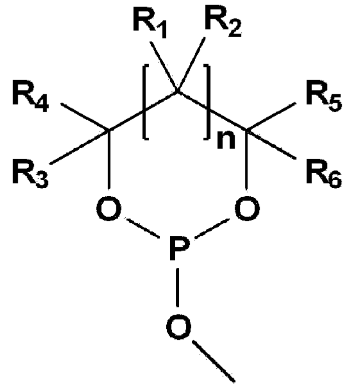

   ,

   wherein, in Chemical Formula 1,

   $R_1$ to $R_6$ are each independently hydrogen, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group, and
   n is an integer of 0 or 1,
   wherein the term "substituted" refers to that at least one hydrogen of is substituted by deuterium, a halogen group, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, C1 to C20 alkoxy group, a C1 to C10 fluoroalkyl group, or a cyano group.

2. The rechargeable lithium battery as claimed in claim 1, wherein the lithium-iron-phosphate-based compound is in an amount of 50 wt% to 98 wt% based on 100 wt% of a total amount of the positive electrode active material.

3. The rechargeable lithium battery as claimed in claim 1 or 2, wherein the positive electrode active material comprises lithium iron phosphate ($LiFePO_4$, LFP) and/or lithium manganese iron phosphate ($LiMnFePO_4$, LMFP).

4. The rechargeable lithium battery as claimed in any one of the preceding claims, wherein the positive electrode active material further comprises lithium composite oxide represented by Chemical Formula 2,

   Chemical Formula 2 $Li_xM^1_yM^2_zM^3_{1-y-z}O_{2-a}X_a$, and

   wherein, in Chemical Formula 2,

   $0.5 \leq x \leq 1.8$, $0 \leq y \leq 1$, $0 \leq z \leq 1$, $0 \leq a \leq 0.05$, and $0 \leq y+z \leq 2$,
   $M^1$, $M^2$, and $M^3$ are each independently at least one element selected from among Ni, Co, Mn, Al, B, Ba, Ca, Ce, Cr, Fe, Mo, Nb, Si, Sr, Mg, Ti, V, W, Zr, and La, and
   X is at least one element selected from among F, S, P, and Cl.

5. The rechargeable lithium battery as claimed in claim 4, wherein the lithium composite oxide comprises one or more selected from among lithium nickel cobalt aluminum oxide ($LiNiCoAlO_2$, NCA), lithium nickel cobalt manganese oxide ($LiNiCoMnO_2$, NCM), lithium manganese oxide ($LiMn_2O_4$, LMO), lithium nickel manganese oxide ($LiNi_{0.5}Mn_{1.5}O_4$, LNMO), and lithium cobalt oxide ($LiCoO_2$, LCO).

6. The rechargeable lithium battery as claimed in claim 4, wherein, in the lithium composite oxide, nickel is present in an amount of equal to or greater than 50 mol% based on 100 mol% of metal except lithium.

7. The rechargeable lithium battery as claimed in claim 1, wherein the positive electrode active material comprises lithium iron phosphate ($LiFePO_4$, LFP) and lithium nickel cobalt aluminum oxide ($LiNiCoAlO_2$, NCA) in a weight ratio of 9:1 to 5:5.

8. The rechargeable lithium battery as claimed in any one of the preceding claims, wherein the positive electrode comprises a binder comprising one or more selected from among polyvinyl alcohol, carboxymethyl cellulose, hydroxypropyl cellulose, diacetyl cellulose, polyvinyl chloride, carboxylated polyvinyl chloride, polyvinyl fluoride, polyethylene oxide, polyvinylpyrrolidone, polyurethane, polytetrafluoroethylene, polyvinylidene fluoride, polyethylene, and polypropylene, and
wherein an amount of the binder is 0.5 wt% to 5 wt% based on 100 wt% of a total amount of the positive electrode.

9. The rechargeable lithium battery as claimed in any one of the preceding claims, wherein the positive electrode comprises a conductive material comprising a carbon-based material, a metal-based material in the form of a metal powder or a metal fiber, a conductive polymer, or a mixture thereof, and
wherein an amount of the conductive material is 0.2 wt% to 5 wt% based on 100 wt% of a total amount of the positive electrode.

10. The rechargeable lithium battery as claimed in any one of the preceding claims, wherein the negative electrode active material comprises a carbon-based negative electrode active material, a Si-based negative electrode active material, a Sn-based negative electrode active material, or a combination thereof.

11. The rechargeable lithium battery as claimed in any one of the preceding claims, wherein Chemical Formula 1 is represented by Chemical Formula 1-1 or Chemical Formula 1-2,

Chemical Formula 1-1

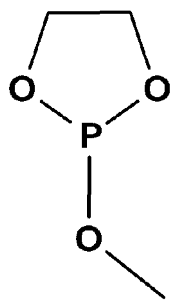

and

Chemical Formula 1-2

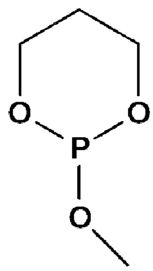

.

**12.** The rechargeable lithium battery as claimed in any one of the preceding claims, wherein the additive represented by Chemical Formula 1 is in an amount of 0.01 wt% to 3 wt% based on 100 wt% of a total amount of the electrolyte.

**13.** The rechargeable lithium battery as claimed in any one of the preceding claims, wherein the non-aqueous organic solvent comprises one or more selected from among ethylene carbonate (EC), propylene carbonate (PC), propyl propionate (PP), ethyl methyl carbonate (EMC), dimethyl carbonate (DMC), diethyl carbonate (DEC), dipropyl carbonate (DPC), methylpropyl carbonate (MPC), ethylpropyl carbonate (EPC), and butylene carbonate (BC).

**14.** The rechargeable lithium battery as claimed in any one of the preceding claims, wherein the lithium salt comprises one or more selected from among $LiPF_6$, $LiClO_4$, $LiBF_4$, lithium bis(fluorosulfonyl)imide (LiFSI), LiTFSI, $LiSO_3CF_3$, LiBOB, LiFOB, LiDFBP, LiTFOP, $LiPO_2F_2$, $LiSbF_6$, $LiAsF_6$, $LiAlO_2$, $LiAlCl_4$, LiCl, LiI, $LiN(SO_3C_2F_5)_2$, and $LiC_4F_9SO_3$, and wherein a concentration of the lithium salt is 0.1 *M* to 2.0 *M*.

FIG. 1

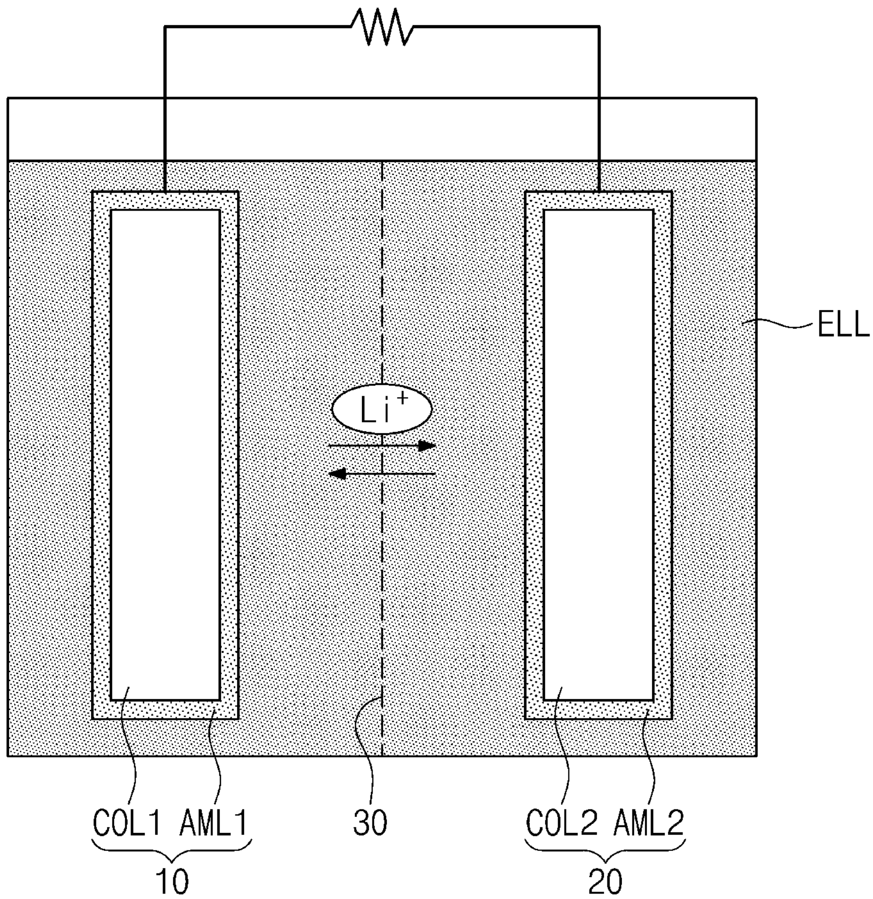

FIG. 2

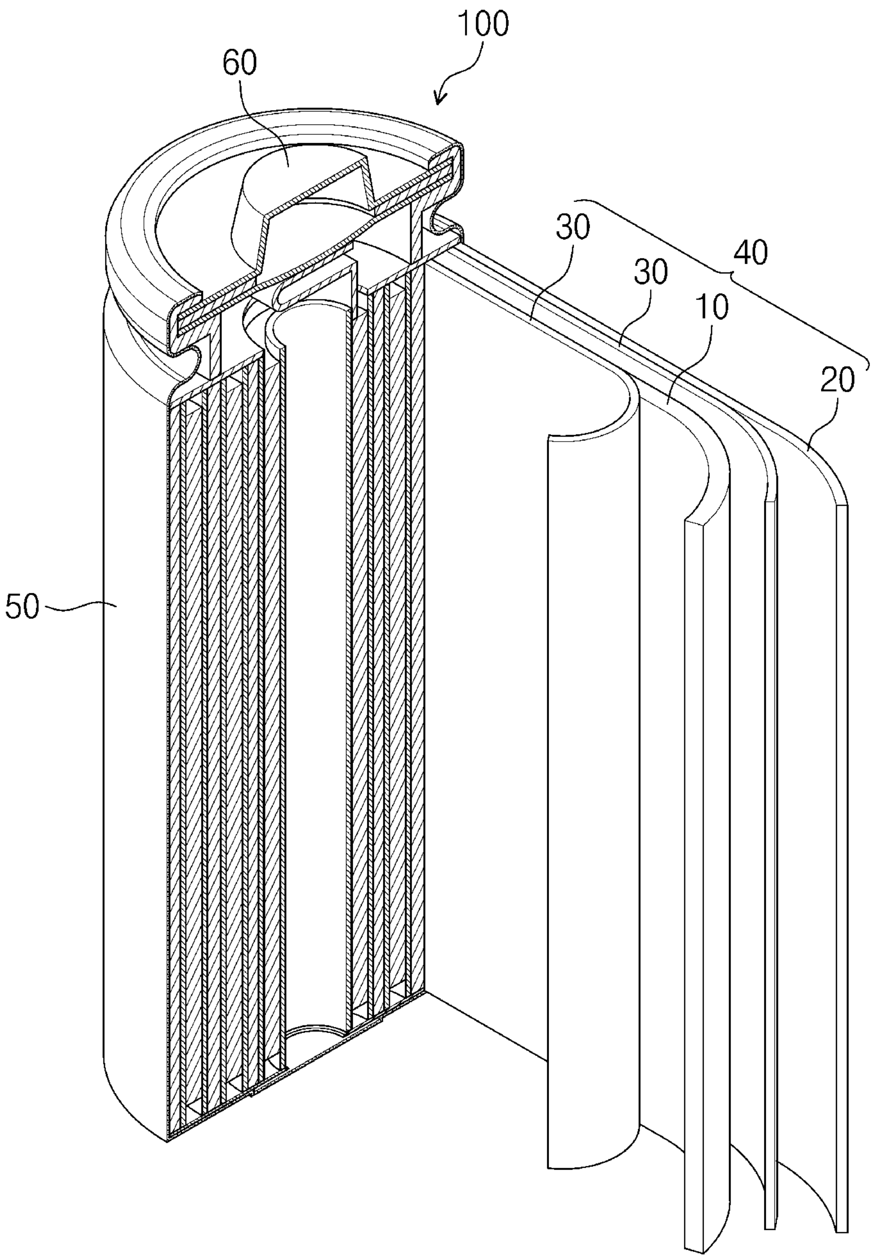

FIG. 3

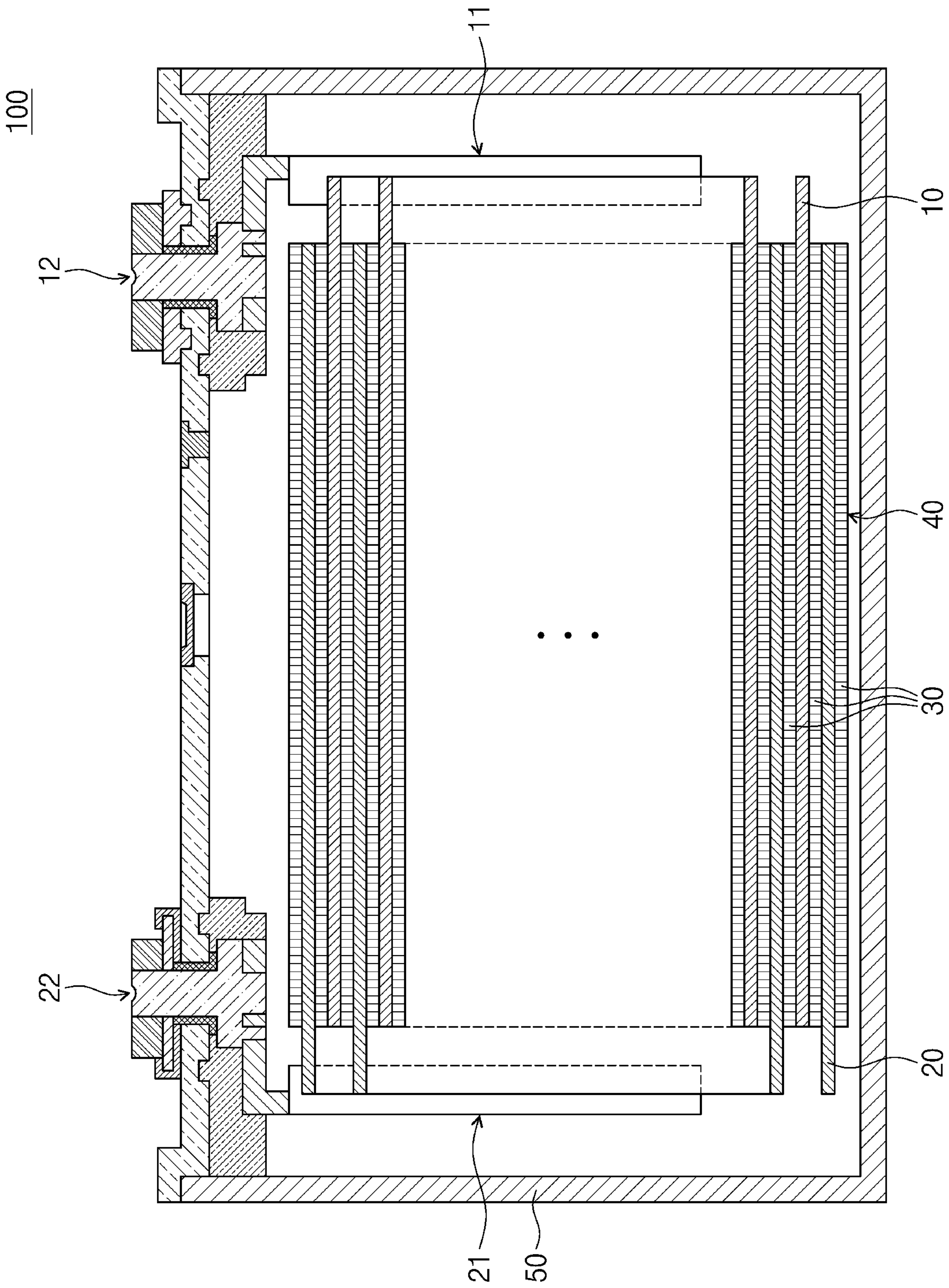

FIG. 4

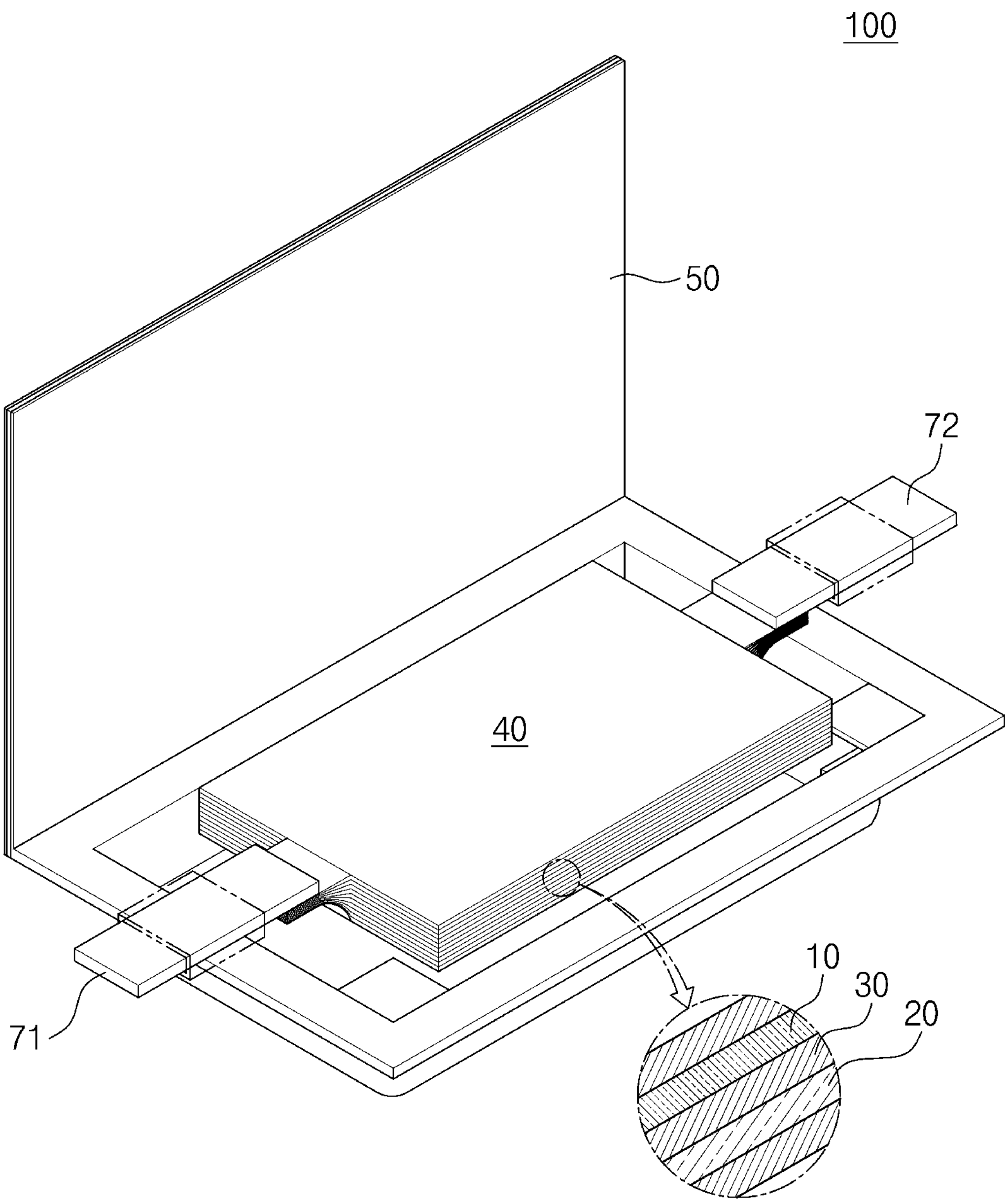

FIG. 5

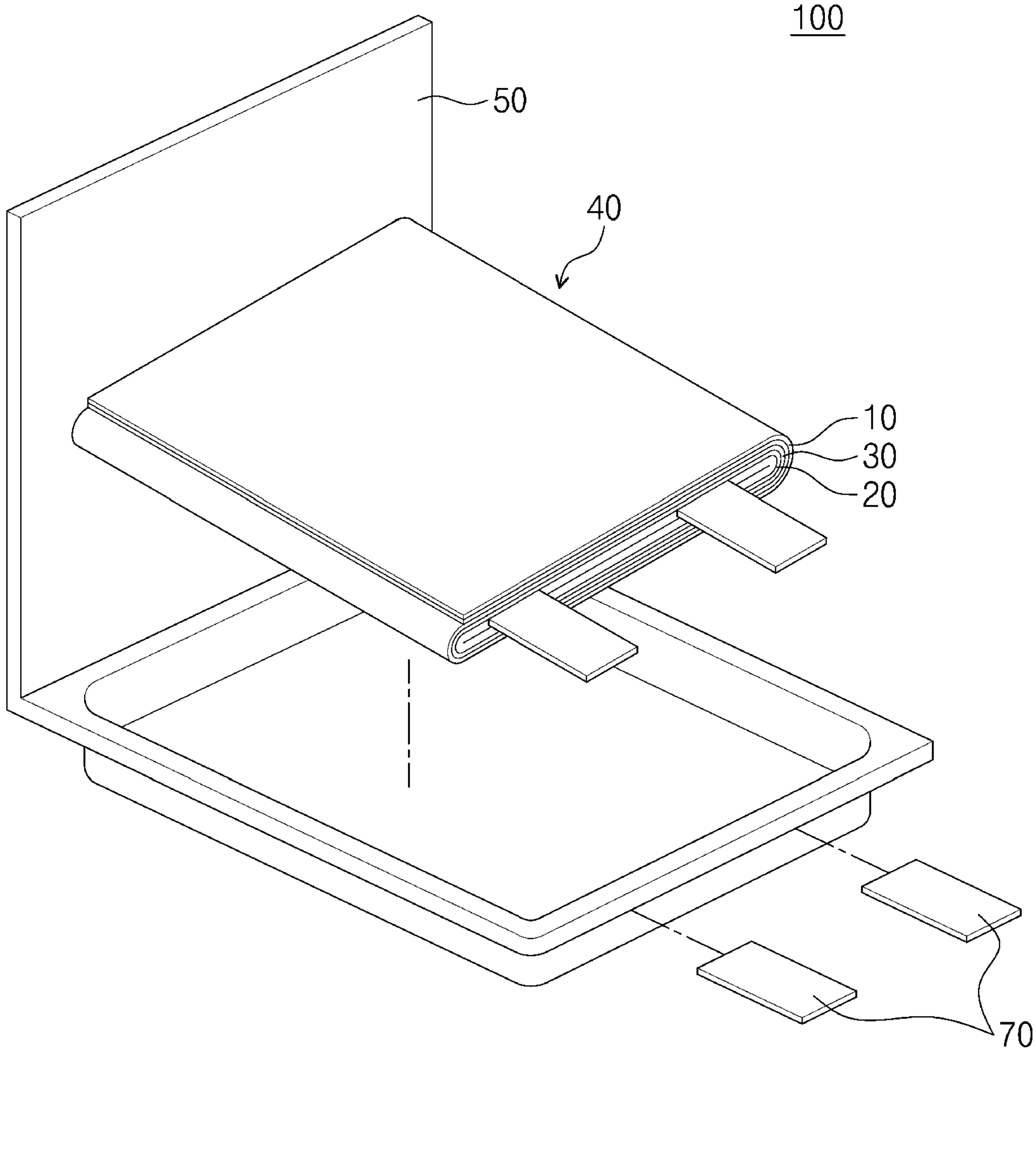

Europäisches Patentamt
European Patent Office
Office européen des brevets

# EUROPEAN SEARCH REPORT

Application Number
EP 25 18 0830

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>A | EP 4 020 653 A1 (NINGDE AMPEREX TECHNOLOGY LTD [CN]) 29 June 2022 (2022-06-29)<br>* claim 13, compound 1c; Example 33; par. 147, 146; par. 225 *<br>----- | 1-10, 12-14<br>11 | INV.<br>H01M4/50<br>H01M4/52<br>H01M4/58<br>H01M10/0567<br>H01M10/42 |
| | | | TECHNICAL FIELDS SEARCHED (IPC) |
| | | | H01M |

The present search report has been drawn up for all claims

3

| Place of search | Date of completion of the search | Examiner |
|---|---|---|
| Munich | 4 November 2025 | Bettio, Andrea |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 18 0830

This annex lists the patent family members relating to the patent documents cited in the above-mentioned European search report. The members are as contained in the European Patent Office EDP file on
The European Patent Office is in no way liable for these particulars which are merely given for the purpose of information.

04-11-2025

| Patent document cited in search report | Publication date | Patent family member(s) | Publication date |
|---|---|---|---|
| EP 4020653 A1 | 29-06-2022 | EP 4020653 A1 | 29-06-2022 |
| | | JP 7575448 B2 | 29-10-2024 |
| | | JP 2022548359 A | 18-11-2022 |
| | | KR 20220042473 A | 05-04-2022 |
| | | US 2023155132 A1 | 18-05-2023 |
| | | US 2025105300 A1 | 27-03-2025 |
| | | WO 2021128095 A1 | 01-07-2021 |

EPO FORM P0459

For more details about this annex : see Official Journal of the European Patent Office, No. 12/82